# EUROPEAN PATENT APPLICATION

(11) **EP 2 312 840 A1**
(43) Date of publication of application: **20.04.2011**
(21) Application number: 10181998.5
(22) Date of filing: 29.09.2010
(51) Int. Cl.: H04N 5/775, G11B 27/34, H04N 5/445, H04N 5/765

(54) **Digital broadcasting receiver and method for displaying recorded program**

(30) Priority: 30.09.2009 JP 2009228935
(71) Applicant: Kabushiki Kaisha Toshiba, Minato-ku Tokyo (JP)
(72) Inventor: Ida, Tomotaka, Tokyo (JP); Miyazawa, Akira, Tokyo (JP); Kuwahara, Kazuki, Tokyo (JP)
(74) Representative: HOFFMANN EITLE

(57) **Abstract**

According to one embodiment, a digital broadcasting receiver includes a recorder, an archiving processor and a generator. The recorder is configured to record a program of a given channel for a programmed recording time. The archiving processor is configured to archive the recorded program to another recorder. The generator is configured to generate a recorded program table in which the program with respect to the programmed recording time and the given channel is displayed along with archiving information.

## Description

### BACKGROUND

### 1. Technical Field

Embodiments described herein relate generally to a digital broadcasting receiver for recording programs received by digital broadcasting and a method for displaying recorded programs.

### 2. Background Art

An environment that lots of programs can be viewed and listened to with high image quality and high sound quality is developed with the advance of full-scale operation of digital terrestrial broadcasting and BS/CS digital broadcasting. Digital broadcasting is provided with a mechanism of Electronic Program Guide (EPG) by which a program table for today or for a week is displayed in response to pushing of a button provided in a remote controller of a receiver so that display of program contents such as broadcasting time, the cast, retrieval of desired information, programmed-viewing and programmed-recording can be performed.

Increase in the broadcasting time of programs which a viewer wants to view and overlap of the broadcasting time have occurred as the number of channels increases. For that reason, the opportunity of recording programs to make it possible for the viewer to view the programs at viewer's convenience has increased.

From this background, there has been proposed a television program recorder including: a TV reception module which receives television broadcasting; a program recorder which records broadcast programs scheduled to be recorded; a recorded program information recorder which records, as recorded program information, the broadcast channel and broadcast time of each program recorded by the program recorder; and a display controller which performs a recorded program display process for displaying information of recorded programs in the form of a list having broadcast channel as the horizontal axis and broadcast time as the vertical axis based on the recorded program information.

### BRIEF DESCRIPTION OF THE DRAWINGS

A general configuration that implements the various feature of embodiments will be described with reference to the drawings. The drawings and the associated descriptions are provided to illustrate embodiments and not to limit the scope of the embodiments.
Fig. 1 is a block diagram exemplary showing the configuration of a digital broadcasting receiver according to one embodiment;
Fig. 2 is a view exemplary showing an example of a recorded program table according to a first embodiment;
Figs. 3A and 3B are flow charts exemplary showing an operation flow for a program recording process;
Fig. 4 is a flow chart exemplary showing an operation flow for a process of generating and displaying a recorded program table;
Fig. 5 is a flow chart exemplary showing an operation flow for an archiving process;
Fig. 6 is a view showing an example of a recorded program table according to a second embodiment;
Fig. 7 is a view showing examples of marks concerned with display of archiving;
Fig. 8 is a view showing an example of a recorded program table according to a third embodiment; and
Fig. 9 is a view showing an example of a recorded program table according to a fourth embodiment.

### DETAILED DESCRIPTION

Embodiments will be described below with reference to the drawings.

According to one embodiment, a digital broadcasting receiver includes a recorder, an archiving processor and a generator. The recorder is configured to record a program of a given channel for a programmed recording time. The archiving processor is configured to archive the recorded program to another recorder. The generator is configured to generate a recorded program table in which the program with respect to the programmed recording time and the given channel is displayed along with archiving information.

According to another aspect of the invention, a recorded program display method includes: recording a program of a given channel on a designated recorder for a programmed recording time; archiving the recorded program to a recorder other than the designated recorder; generating a recorded program table in which the program with respect to the programmed recording time and the given channel is displayed along with archiving information; and displaying the recorded program table.

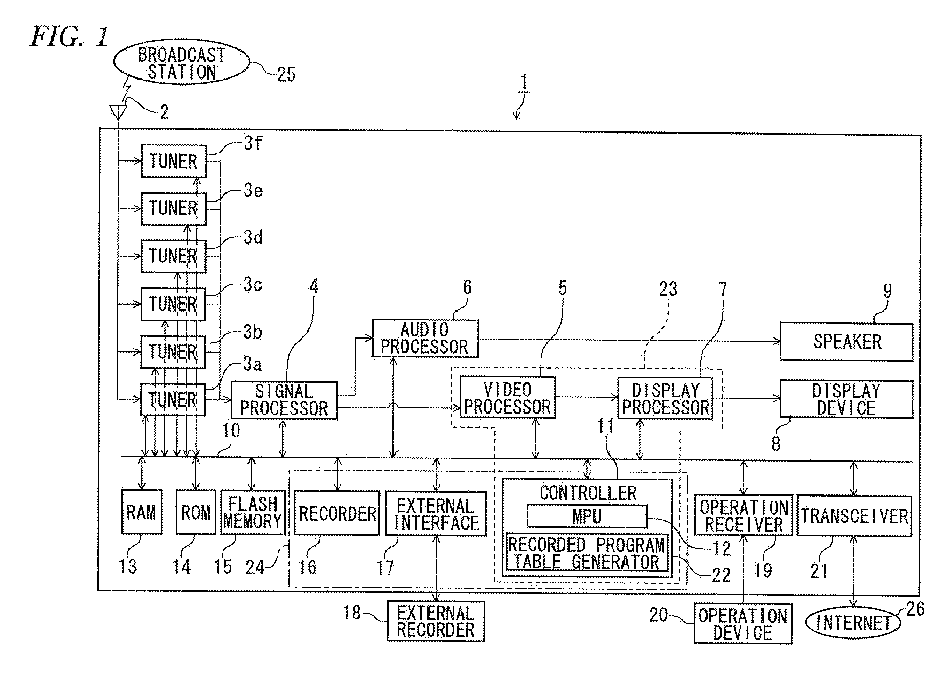

Fig. 1 is a block diagram showing the configuration of a digital broadcasting receiver 1. An antenna 2 is a digital terrestrial broadcast or satellite digital broadcast antenna for receiving broadcast electric waves transmitted from a broadcast station 25. Each of tuners 3a to 3f selects a broadcast signal of a desired channel from broadcast signals of digital terrestrial broadcasting or satellite digital broadcasting and demodulates the broadcast signal in accordance with the modulation method of each digital broadcasting. Each signal of digital terrestrial broadcasting is demodulated into digital video and audio signals by OFDM (Orthogonal Frequency Division Multiplexing) demodulation and each signal of satellite digital broadcasting is demodulated into digital video and audio signals by PSK (Phase Shift Keying) demodulation, so that the digital video and audio signals are output to a signal processor 4.

The signal processor 4 selectively applies predetermined digital signal processing to the digital video and audio signals fed from each tuner 3 and outputs the processed video and audio signals to a video processor 5 and an audio processor 6 respectively. The signal processor 4 has functions of an MPEG (Moving Picture Experts Group) encoder, an MPEG decoder, an audio-video decoder, etc.

The video processor 5 performs plane management of digital video data given from the signal processor 4, and data broadcasting transmitted via a bus or window drawing due to a GUI (Graphical User Interface) to superpose the data broadcasting or window drawing on the video data and sends the superposed data to a display processor 7.

The display processor 7 converts the superposed data into data of a format (the number of pixels, frame frequency and scanning method) displayable on a display device 8 or adjusts the display color to an arbitrary color and outputs the data to the display device 8 to display video. The audio processor 6 converts the digital audio data given from the signal processor 4 into an analog audio signal to be reproduced by a speaker 9 and outputs the analog audio signal to the speaker 9 to reproduce audio.

All operations of the digital broadcasting receiver 1 inclusive of the aforementioned receiving operation are generally controlled by a controller 11. The controller 11 is equipped with an MPU (Micro Processing Unit) 12 and controls respective constituent members connected via a bus 10.

An RAM (Random Access Memory) 13 is a read/write memory for storing various kinds of data necessary for data processing in the controller 11. The RAM 13 operates as a buffer memory for storing video data or the like. An ROM (Read Only Memory) 14 is an exclusive memory for read use. A control program or the like performd by the control program 11 is stored in the ROM 14.

A flash memory 15 is a semiconductor memory which is rewritable and so nonvolatile that data are not erased even when the digital broadcasting receiver 1 is powered off. The flash memory 15 has a function of storing data for various kinds of video settings, audio settings, record scheduling, viewing scheduling, etc. designated by a viewer. Data such as a designated channel, a designated time, etc. for recording are once stored in the RAM 13 and then stored in the flash memory 15.

The digital broadcasting receiver 1 has a recorder 16. The recorder 16 is a recorder including an HDD (Hard Disk Drive) or an SSD (Solid state Drive). The recorder 16 is connected to the data bus 10 but equipped with an interface unit for recording/reproducing information so that broadcast programs or the like can be recorded/reproduced on/from the HDD or SSD through the interface unit. Programs of designated channels can be recorded simultaneously on the recorder 16 for a programmed recording time.

An external interface 17 is an interface such as a USB (Universal Serial Bus) interface, an IEEE1394 (Institute of Electrical and Electronic Engineers 1394) interface, an eSATA (external Serial ATA (AT Attachment)) interface, etc. An external recorder 18 inclusive of a USB memory, a USB external device and drives such as an HDD, an SSD, a CD-R/RW, a DVD writer, etc. is connected to the external interface 17. Programs can be recorded on the external recorder 18 through the external interface 17. The viewer can select either of the reorder 16 and the external recorder 18 as a recorder for recording programs.

Generally, copy control is applied to digital broadcasting, so that "record ounce"' programs cannot be copied but can be moved. "Move" means that a storage place of programs recorded on an HDD or SSD is changed (moved). After moving, the programs recorded on the HDD or SSD are erased automatically. "Dubbing 10" programs recorded on an HDD or SSD can be copied by 9 times but can be moved at the tenth cycle. Such "dubbing 10" programs can be copied to another HDD or SSD (inclusive of another partition of one and the same HDD or SSD) or to an optical disk such as a DVD. In this embodiment, copying or moving programs recorded on the HDD or SSD of the recorder 16 to the external recorder 18 is referred to as archiving. In addition, copying or moving programs recorded on the HDD or SSD of the external recorder 18 to the recorder 16 is also referred to as archiving.

The digital broadcasting receiver 1 has an archiving processor 24 which is composed of the controller 11, the recorder 16 and the external interface 17. The archiving processor 24 archives programs recorded on the HDD or SSD of the recorder 16 to another recorder such as another partition of the recorder 16 or the external recorder 18 in response to viewer's operation. The archiving processor 24 can also archive programs recorded on the HDD or SSD of the external recorder 18 to the recorder 16 in response to viewer's operation.

An operation receiver 19 receives an operation signal transmitted from an operation device 20 and transfers the operation signal to the controller 11. For example, the operation device 20 is a remote controller using radio communication based on infrared rays, Bluetooth (registered trademark), etc., a wire or wireless keyboard, a mouse, or the like, which transmits an operation signal. The operation receiver 19 receives the operation signal transmitted from the remote controller, the keyboard, the mouse, or the like.

The digital broadcasting receiver 1 is connected to the Internet 26 through a transceiver 21. Accordingly, the digital broadcasting receiver 1 can exchange information with a device such as a server on a network such as the Internet 26 through the transceiver 21.

The controller 11 has a function of a recorded program table generator 22. The digital broadcasting receiver 1 is equipped with multiple tuners 3 so that multiple programs can be designated to be recorded simultaneously and continuously. The recorded program table generator 22 generates a recorded program table based on the plurality of designated channels and the programmed recording time designated by the viewer.

The viewer can select any program to record the program or schedule to record the program while viewing a program table based on EPG data on a screen 8a. EPG is provided so that the viewer can select any program easily in the environment that increase in the number of channels has advanced. The program table is displayed on the screen 8a of the display device 8 of the digital broadcasting receiver 1 in imitation of a display state of a television program table in a newspaper or the like. The viewer; can perform program selection, detailed information display and programmed recording by using the remote controller while viewing the program table on the screen 8a.

Although the display format of the program table based on EPG data varies according to each broadcasting receiver maker or each broadcasting receiver type, the digital broadcasting receiver 1 is configured so that programs which will be broadcast after the current time are arranged in a table with a channel axis and a time axis taken as horizontal and vertical directions respectively like the television program table in a newspaper. When a program is selected, detailed information such as the category of the program, the cast, the contents of the program, etc. are displayed in addition to the program name of the program and the broadcasting date of the program.

EPG data is packetised and multiplexed like video, audio, etc. and transmitted. Data of program information is contained in EIT (Event Information Table) of SI (Service Information as program arrangement information). Information output from the signal processor 4 is analyzed by the controller 11 so that a program table is generated. The generated program table is displayed on the screen 8a of the display device 8 by a display controller 23 which is configured by the video processor 5, the display processor 7 and the controller 11.

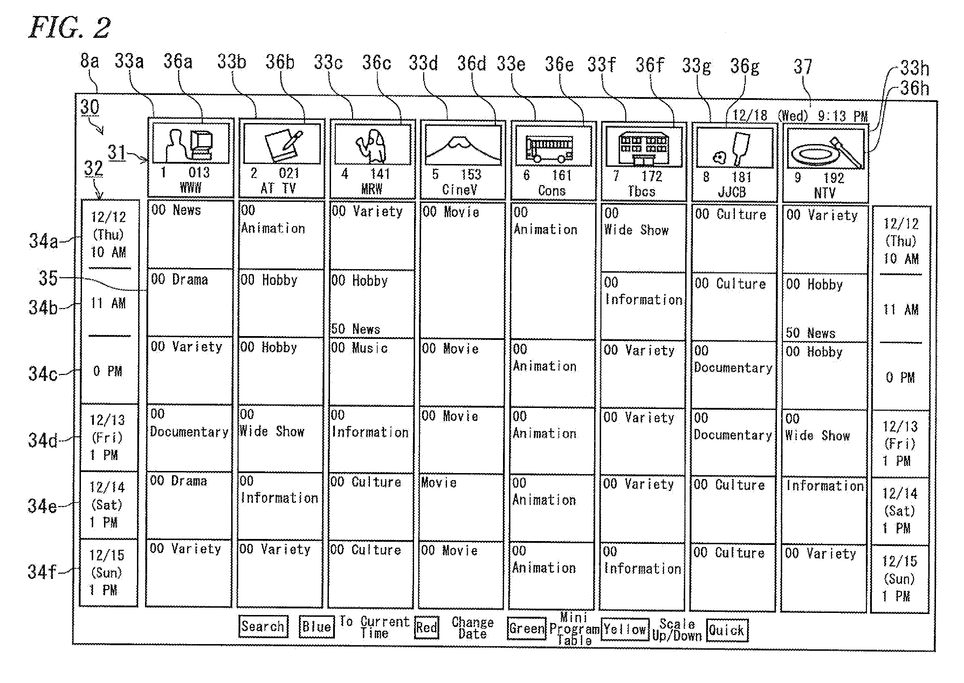

Fig. 2 is a view showing an example of the recorded program table. The recorded program table 30 may be displayed substantially entirely on the screen 8a of the display device 8 or a part of the recorded program table 30 may be displayed on a designated range of the screen 8a. Fig. 2 shows the former case where the recorded program table 30 is displayed substantially entirely on the screen 8a. The recorded program table 30 is generated by the recorded program table generator 22 and displayed on the screen 8a by the display controller 23.

The basic display format of the recorded program table 30 is like the display format of the program table based on EPG data so that a channel axis 31 indicating each channel and a time axis 32 indicating time are arranged in horizontal and vertical directions respectively on the screen 8a. The program table based on EPG data is intended for all channels allowed to be received by the digital broadcasting receiver 1 and a continuous time after the current time, whereas the recorded program table 30 is intended for display of programs recorded based on designated channels and a programmed recording time.

A function of designating a channel or a plurality of channels and a time and recording a program or programs of the designated channel or channels simultaneously for the programmed recording time is one of recording functions of the digital broadcasting receiver 1. The recorded program table 30 is for only displaying the designated channel or channels and the programmed recording time. When the number of channels allowed to be received reaches tens of channels, it takes time for the viewer to search for a program the viewer wants to view if channels which are not record-scheduled are also displayed in the recorded program table. Moreover, if the program table before the current time is displayed entirely, searching becomes troublesome because of increase in display size when a period of several days or more has passed. Accordingly, displaying only the designated channel or channels and the programmed recording time in the program table format is very convenient to the viewer.

In Fig. 2, the designated channels are displayed on the channel axis 31. Channel-displays 33a to 33h corresponding to 8 channels are displayed. Right scrolling or left scrolling can be performed by operation of cursor buttons of the remote controller so that other channels not displayed on the screen 8a can be browsed.

The programmed recording time is displayed on the time axis 32. Time-displays 34a to 34f corresponding to 6 hours are displayed. The time-display 34a indicates a time zone of one hour from 10 a.m. to 11 a.m. on Dec. 12. The time-display 34b indicates a time zone of one hour from 11 a.m. to 0 p.m. on Dec. 12. The time-display 34c indicates a time zone of one hour from 0 p.m. to 1 p.m. on Dec. 12. The time-displays 34a to 34c indicate a continuous time zone of 3 hours. The time-display 34d indicates a time zone of one hour from 1 p.m. to 2 p.m. on Dec. 13. The time-display 34e indicates a time zone of one hour from 1 p.m. to 2 p.m. on Dec. 14. The time-display 34f indicates a time zone of one hour from 1 p.m. to 2 p.m. on Dec. 15. Up scrolling or down scrolling can be performed by operation of cursor buttons of the remote controller so that other time zones not displayed on the screen 8a can be browsed. The time axis 32 is displayed also on the right side of the screen.

Although Fig. 2 shows the case where only category names of programs are described in a region of a program-display 35 for the sake of simplification of the drawing, recorded program names and brief program introductions are practically described in accordance with channels and time zones. The descriptive contents are the same as those of the program table displayed based on EPG data. When a program is recorded, EPG-based program information data is recorded simultaneously so that the EPG-based program information data can be used when the recorded program table generator 22 generates a recorded program table 30.

In Fig. 2, thumbnail-displays 36a to 36h are arranged in the inside of the channel-displays 33a to 33h respectively. Thumbnails are images which are scaled down so that a large number of images can be displayed as a list. The images are moving images or still images. Just after the recorded program table 30 is displayed on the screen, thumbnails of programs corresponding to respective channels in the uppermost time-display 34a displayed on the screen 8a are displayed in the thumbnail-displays 36a to 36h respectively.

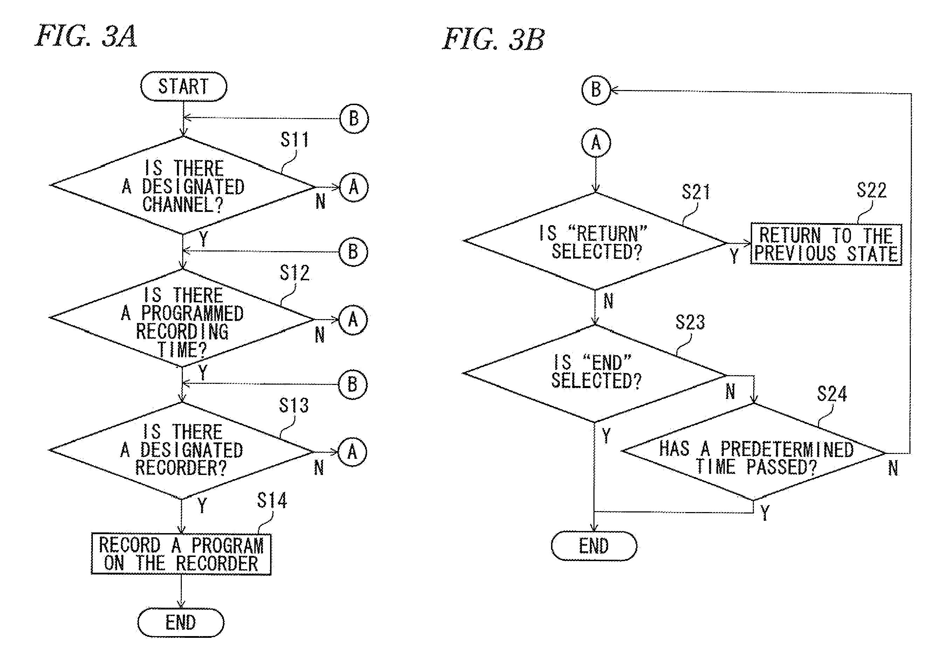

Figs. 3A and 3B are flow charts showing an operation flow for a program recording process. The operation flow will be described in the case where a channel or a plurality of channels and a time are designated so that a program or programs of the designated channel or channels can be recorded simultaneously for the programmed recording time. In S11 of Fig. 3A, the controller 11 determines whether there is any designated channel designated by the viewer or not. The viewer designates a designated channel by using the remote controller or the like while viewing the program table. The controller 11 sets the designated channel in response to a signal given from the operation receiver 19.

When there is no designated channel designated, processing goes to S21 of the operation flow shown in Fig. 3B. In S21, determination is made as to whether "return" is selected or not by the remote controller or the like. When "return" is selected, processing goes to S22 in which the state returns to the previous state. The "previous state" in this case means restoration to the state just before the recording process. When "return" is not selected, processing goes to S23 in which determination is made as to whether "end" is selected or not. When "end" is selected, the recording process is terminated. When "end" is not selected, processing goes to S24 in which determination is made as to whether a predetermined time has passed or not. When the predetermined time has passed, the recording process is terminated. The predetermined time is generally set in a range of from 1 minute to 2 minutes. When the predetermined time has not passed, processing goes back to S11.

In S12, the controller 11 determines whether there is any programmed recording time designated by the viewer or not. The controller 11 sets the programmed recording time in response to a signal given from the operation receiver 19. When there is no programmed recording time designated, processing goes to S21 of the operation flow shown in Fig. 3B. Although the operation in Fig. 3B will be omitted because it has been described above, processing goes back to S12 when the predetermined time has not passed.

In S13, the controller 11 determines whether there is any recorder designated by the viewer or not, that is, whether either of the recorder 16 and the external recorder 18 is designated or not. The controller 11 sets either of the recorder 16 and the external recorder 18 as the designated recorder. When there is no recorder designated, processing goes to S21 of the operation flow shown in Fig. 3B. Although the operation in Fig. 3B will be omitted because it has been described above, processing goes back to S13 when the predetermined time has not passed.

In S14, the controller 11 records programs of the designated channels simultaneously on the designated recorder for the programmed recording time.

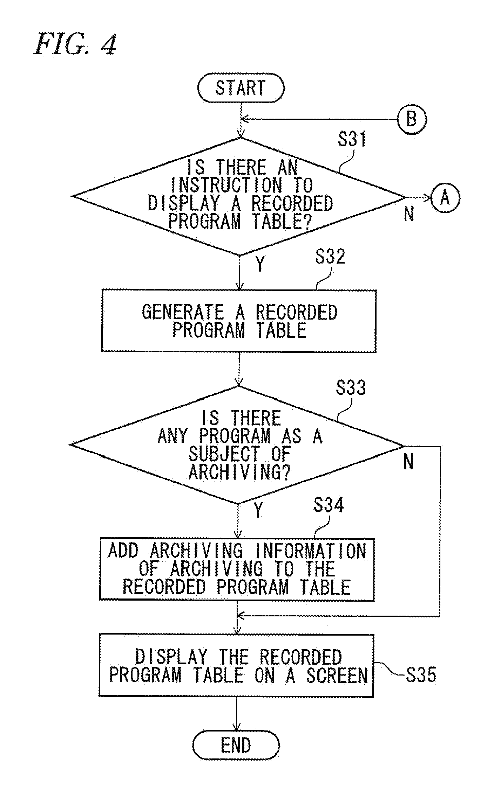

Fig. 4 is a flow chart showing an operation flow for a process of generating and displaying the recorded program table. In S31, the controller 11 determines whether there is a viewer's instruction to display the recorded program table 30 or not. The controller 11 goes to S32 in response to the display instruction signal given from the operation receiver 19. When there is no instruction to display the recorded program table 30, processing goes to S21 of the operation flow shown in Fig. 3B. Although the operation in Fig. 3B will be omitted because it has been described above, processing goes back to S31 when the predetermined time has not passed.

In S32, the recorded program table generator 22 generates a recorded program table based on data such as the designated channel and the programmed recording time stored in the flash memory 15, program information recorded on the recorder 16 or the external recorder 18, etc.

In S33, the recorded program table generator 22 determines whether there is any program as a subject of archiving among the programs or not. Determination is made as to whether each program has been archived, whether each program is under archiving or whether each program has been scheduled to be archived. When there is any program as a subject of archiving, processing goes to S34 in which archiving information of archiving is added to each program column in the region of the program-display 35 in the recorded program table. When there is no program as a subj ect of archiving among the programs, processing goes to S35.

In S35, the display controller 23 displays the recorded program table generated by the recorded program table generator 22 on the screen 8a of the display device 8. The display controller 23 is set initially so that the recorded program table is displayed entirely on the screen 8a.

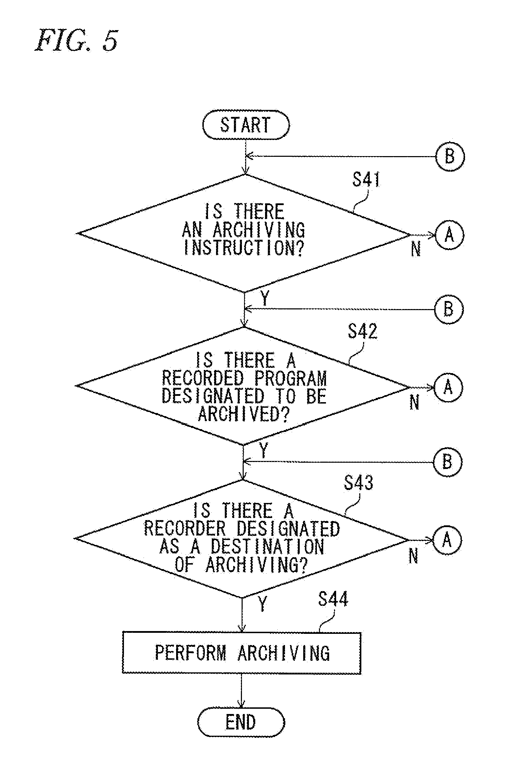

Fig. 5 is a flow chart showing an operation flow for archiving programs. In S41, the controller 11 determines whether there is a viewer's instruction to archive any recorded program or not. When determination results in that there is an archiving instruction, processing goes to S42. When there is no archiving instruction, processing goes to S21 of the operation flow shown in Fig. 3B. Although the operation in Fig. 3B will be omitted because it has been described above, processing goes back to S41 when the predetermined time has not passed.

In S42, the archiving processor 24 determines whether there is any recorded program designated to be archived or not. The viewer can designate programs to be archived while viewing the recorded program table. When determination results in that there is any recorded program designated to be archived, processing goes to S43. When there is no recorded program designated to be archived, processing goes to S21 of the operation flow shown in Fig. 3B. Although the operation in Fig. 3B will be omitted because it has been described above, processing goes back to S42 when the predetermined time has not passed.

In S43, the archiving processor 24 determines whether there is a recorder designated as a destination of archiving programs or not, that is, whether either of the recorder 16 and the external recorder 18 is designated or not. When determination results in that there is a recorder designated as a destination of archiving, processing goes to S44. When there is no recorder designated as a destination of archiving, processing goes to S21 of the operation flow shown in Fig. 3B. Although the operation in Fig. 3B will be omitted because it has been described above, processing goes back to S43 when the predetermined time has not passed.

In S44, the archiving processor 24 archives the designated programs. The archiving processor 24 performs archiving of the designated programs or sets scheduling to archive the designated programs. The programs scheduled to be archived are archived at the designated time by the archiving processor 24.

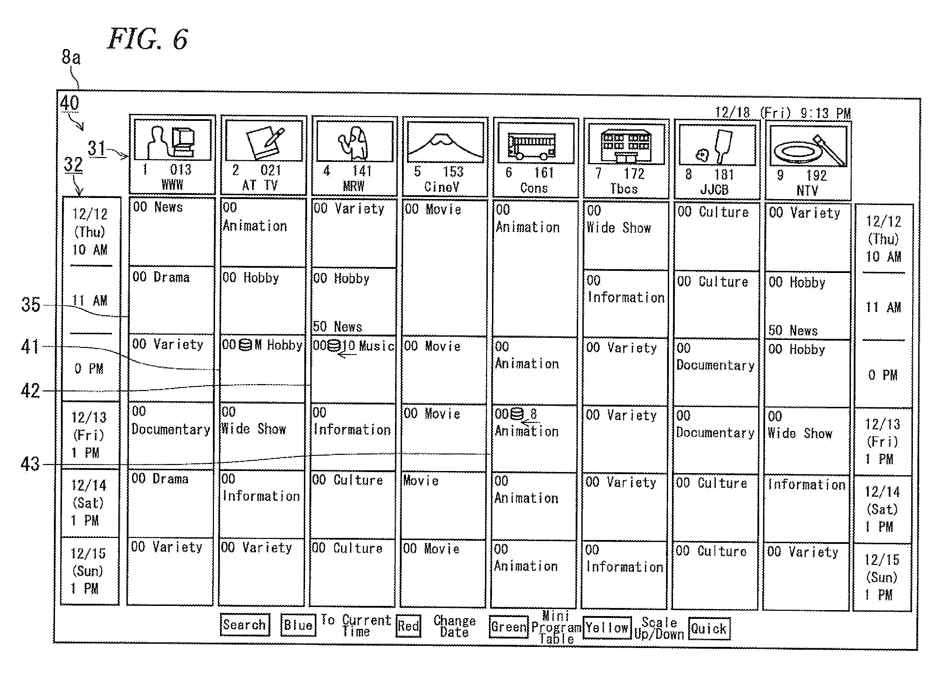

Fig. 6 is a view showing a second embodiment of the recorded program table. The block diagram showing the configuration of the digital broadcasting receiver in the second embodiment is the same as that for the respective modules of the digital broadcasting receiver 1 in the first embodiment shown in Fig. 1. In this embodiment, copying or moving programs recorded on the HDD or SSD of the recorder 16 or the external recorder 18 to another recorder or another external recorder is referred to as archiving. There are limitations on archived programs that the programs cannot be reproduced from a recorded program table 40 or the programs cannot be archived any more. Accordingly, when archived programs are displayed so as to be distinguished from other recorded programs, viewer's convenience is improved.

In Fig. 6, a program 41 in the region of the program-display 35 indicates that the program has been archived and that the contents thereof have been moved. A program 42 indicates that the program has been archived and that the program is a "dubbing 10" program. A program 43 indicates that the program has been archived and that the program can be archived by 8 times.

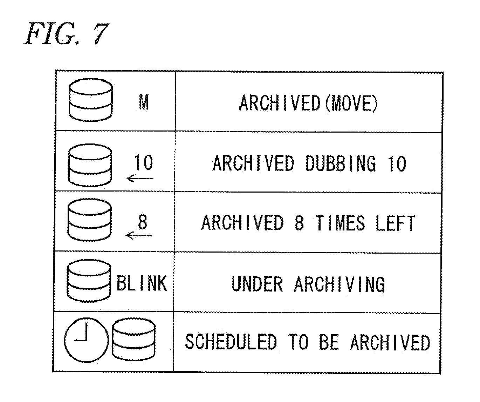

Fig. 7 is a view showing examples of marks concerned with display of archiving. For example, a disk mark analogous to a disk is set as a mark concerned with archiving. The disk mark accompanied by "M" indicates that the program has been archived and that the program has been moved. The disk mark accompanied by a combination mark of "10" and an arrow indicates that the program has been archived and that the program is a "dubbing 10" program. The disk mark, for example, accompanied by a combination mark of "8" and an arrow indicates that the program has been archived and that the program can be archived by 8 times. The disk mark blinking indicates that the program is under archiving. The disk mark accompanying a clock mark indicates that the program has been scheduled to be archived.

The mark need not be limited to the disk mark, so that any mark can be set. The mark indicating that the program is under archiving need not blink, so that the color of the mark may be changed or the color of the mark may be changed periodically. The mark indicating that the program has been scheduled to be archived need not be limited to the clock mark, so that another suitable mark may be used or "archived" may be displayed.

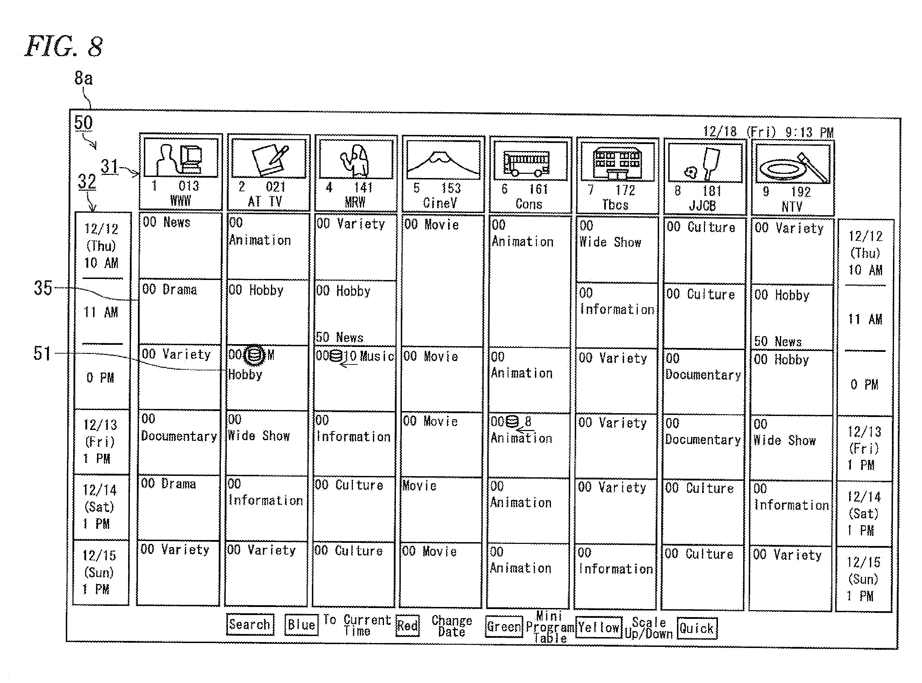

Fig. 8 is a view showing a third embodiment of the recorded program table. The block diagram showing the configuration of the digital broadcasting receiver in the third embodiment is the same as that for the respective modules of the digital broadcasting receiver 1 in the first embodiment shown in Fig. 1. There are limitations on programs under archiving that the programs cannot be reproduced from a recorded program table 50 or the programs cannot be archived repetitively. Accordingly, when programs under archiving are displayed so as to be distinguished from other recorded programs, viewer's convenience is improved.

In Fig. 8, a disk mark attached to a program 51 in the region of the program-display 35 blinks to indicate that the program is under archiving. The mark indicating that the program is under archiving need not blink, so that the color of the mark may be changed or the color of the mark may be changed periodically. Or "under archiving" may be displayed.

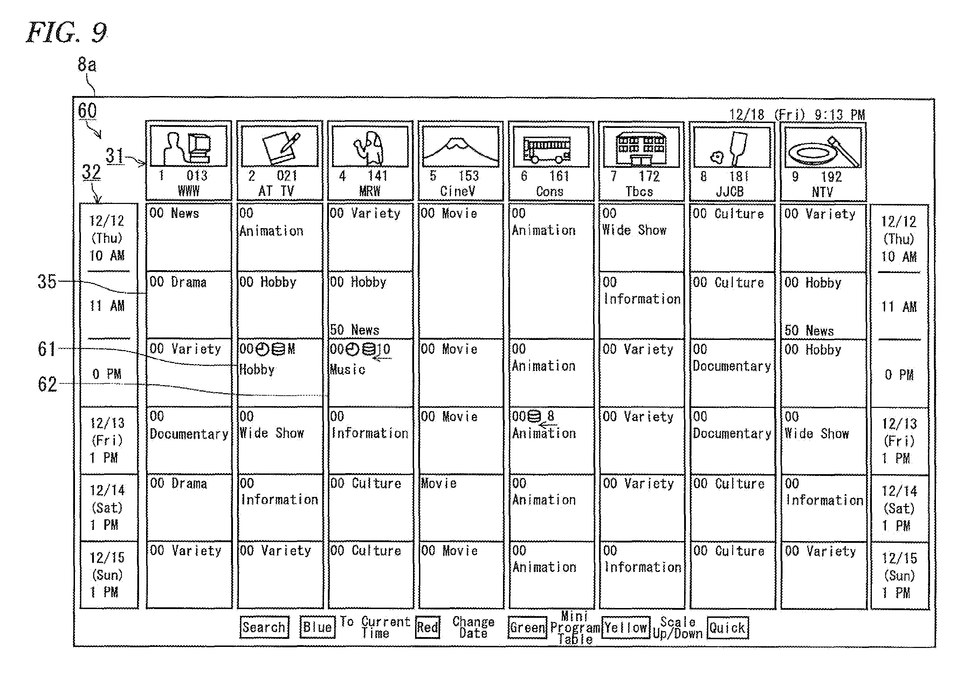

Fig. 9 is a view showing a fourth embodiment of the recorded program table. The block diagram showing the configuration of the digital broadcasting receiver in the fourth embodiment is the same as that for the respective modules of the digital broadcasting receiver 1 in the first embodiment shown in Fig. 1. There are limitations on programs scheduled to be archived that the programs cannot be reproduced from a recorded program table 60 or the programs cannot be scheduled to be archived repetitively. Accordingly, when programs scheduled to be archived are displayed so as to be distinguished from other recorded programs, viewer's convenience is improved.

In Fig. 9, a clock mark and a disk mark are displayed side by side in a program 61 in the region of the program-display 35 to indicate that the program has been scheduled to be archived. A clock mark and a disk mark are displayed side by side in a program 62 to indicate that the program has been scheduled to be archived. The mark indicating that the program has been scheduled to be archived need not be limited to the clock mark, so that another suitable mark may be used or "scheduled to be archived" may be displayed.

As described above, when each program has been archived, a mark or characters indicating that each program has been archived is displayed in the recorded program table so that the viewer can recognize the archived program easily to thereby perceive limitations on the archived program. Moreover, a mark or a character indicating that each program is under archiving or has been scheduled to be archived is displayed in the recorded program table so that the viewer can recognize information of archiving easily.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A digital broadcasting receiver comprising:
a recorder configured to record a program of a given channel for a programmed recording time;
an archiving processor configured to archive the recorded program to another recorder; and
a generator configured to generate a recorded program table in which the program with respect to the programmed recording time and the given channel is displayed along with archiving information.

2. The digital broadcasting receiver of claim 1, wherein
the archiving information comprises at least one of a mark and a character for indicating that the recorded program is archived.

3. The digital broadcasting receiver of claim 1 or 2, wherein
the archiving information comprises at least one of a mark and a character for indicating that the recorded program is under archiving.

4. The digital broadcasting receiver of one of claims 1 to 3, wherein
the archiving information comprises at least one of a mark and a character indicating that archiving of the recorded program is programmed.

5. A recorded program display method comprising:
recording a program of a given channel on a designated recorder for a programmed recording time;
archiving the recorded program to a recorder other than the designated recorder;
generating a recorded program table in which the program with respect to the programmed recording time and the given channel is displayed along with archiving information; and
displaying the recorded program table.
